# EUROPEAN PATENT SPECIFICATION

(11) **EP 2 832 140 B1**
(45) Date of publication and mention of the grant of the patent: **19.04.2017**
(21) Application number: 13768473.4
(22) Date of filing: 29.03.2013
(51) Int. Cl.: H04W 28/02, H04W 28/08, H04L 29/06, H04L 12/24, H04M 15/00, H04N 21/442, H04N 21/61, H04N 21/643, H04N 21/647, H04W 28/06, H04W 16/18

(54) **ADAPTIVE TRAFFIC MANAGEMENT IN CELLULAR WIRELESS NETWORKS**
ADAPTIVE VERKEHRSVERWALTUNG IN ZELLULAREN DRAHTLOSEN NETZWERKEN
GESTION DE TRAFIC ADAPTATIVE DANS DES RÉSEAUX CELLULAIRES SANS FIL

(30) Priority: 30.03.2012 US 201213436658
(43) Date of publication of application: 04.02.2015
(73) Proprietor: Citrix Systems, Inc., Fort Lauderdale, FL 33309 (US)
(72) Inventor: PARTHASARATHY, Kannan, Palo Alto, California 94306 (US); STAVRAKOS, Nicholas James, Los Altos, California 94024 (US)
(74) Representative: Finnegan Europe LLP
(86) International application number: PCT/US2013/034708
(87) International publication number: WO 2013/149203

(56) References cited:
- EP-A1- 2 632 100
- WO-A1-03/081883
- WO-A1-2010/069372
- WO-A1-2010/100315
- WO-A2-2011/119439
- US-A1- 2011 271 309
- US-B1- 7 403 487

## Description

### Background Information

The recent few years has witnessed an explosive growth of data traffic in networks, particularly in cellular wireless networks. This growth has been fueled by a number of new developments that includes faster, smarter and more intuitive mobile devices such as the popular iPhone^{®} series and the iPad^{®} series, as well as faster wireless and cellular network technologies that deliver throughputs on par or better than fixed line broadband technologies.

For many people today, a primary mode of access to the Internet is via mobile devices using cellular wireless networks. Users have come to expect the same quality of experience as in fixed line broadband networks. To meet this insatiable demand, wireless network operators are taking a number of steps such as installing additional cell towers in congested areas, upgrading the backhaul network infrastructure that connects the base stations with the packet core, and deploying newer radio access technologies such as Dual-Cell High Speed Downlink Packet Access (DC-HSDPA) and Long Term Evolution (LTE). While these approaches help to meet the demand for quality of experience, the slow pace at which major network upgrades can be made is not keeping up with the rate at with data traffic is growing. Furthermore, the cost of such network upgrades is not commensurate with the revenue per subscriber that the wireless operator is able to get, i.e., the cost being much higher than any increase in revenue the wireless operator can expect. Faced with this challenge, cellular wireless network operators across the globe are introducing various traffic management techniques to control the growth of data traffic and increase their revenues at the same time.

Traffic Management is a broad concept and includes techniques such as throttling of low priority traffic, blocking or time shifting certain types of traffic, and traffic optimization. Optimization of web and video traffic is a key component in the array of traffic management techniques used by wireless operators. Web traffic refers to traditional web site browsing, and video traffic refers to watching videos over the Internet - between the two, web and video traffic accounts for more than 80% of the data traffic in typical cellular wireless networks. Optimization of web and video traffic helps alleviate the problem of traffic growth by compressing the data sent through the Radio Access Network (RAN) segment of a cellular wireless network and ultimately via the over-the-air wireless link between a base station and a mobile device. Some of the compression techniques are lossy in the sense that not all information is preserved when data is compressed. For example, lossy optimization of web traffic might include transcoding images at a lower quality level compared to the original. And lossy optimization of video traffic may also include decreasing the frame rate or transcoding each picture frame at a lower quality level compared to the original. Regardless of the actual technique used, lossy optimization has the potential to degrade the Quality of Experience (QoE) of a user from the perspective of the richness and quality of the content being viewed. Compression of data, however, can help improve the user experience when there is network congestion by lowering the download time for web pages and reducing or eliminating stalling in the case of videos. As such, optimization techniques involving lossy compression of images and video can be used when appropriate (e.g., in situations where there is network congestion).

EP 2 632 100, which forms part of the state of the art under Article 54(3) EPC, relates to a system and method for managing network traffic. A quality of experience metric is monitored in real-time and a traffic management action is determined based on the quality of experience metric.

WO 2010/069372 relates to a method of monitoring quality of experience of a service delivering media data to user equipment in a telecommunications network. The method comprises determining quality of experience metrics every *X* seconds. The period of time that separates two measurements is dynamically adjusted.

### SUMMARY

In accordance with the invention, there is provided: a method as recited in claim 1; a computer readable storage medium as recited in claim 7; and an apparatus as recited in claim 8.

Also disclosed herein is an apparatus for adaptive traffic management, comprising: a traffic processor configured to determine whether historical content data is available for a time period and to acquire historical content data associated with a web content source if the historical content data is available; a user experience monitor configured to determine one or more user experience metrics for a specific terminal based on the acquired historical content data; and a predictor configured to acquire an expected quality of experience score based at least in part on the determined one or more user experience metrics, wherein the expected quality of experience score can be used for providing one or more traffic management optimization rules for current content data to the specific terminal.

The traffic processor may be configured to determine whether historical content data is available by determining whether the historical content data is available for a first time period, and if the historical content data is not available for the first time period, determining whether the historical content data is available for a second time period, wherein the second time period is greater than the first time period.

The user experience monitor may be configured to determine one or more user experience metrics after acquiring one or more cell level user experience metrics for at least one past time period, if the historical content data is not available for the second time period.

The historical content data may be historical video data. The traffic monitor may be configured to determine one or more user experience metrics by measuring a play time of the acquired video data, measuring a stalling time of the acquired video data, and computing a video playback smoothness index of the acquired video data based on the measured play time and the measured stalling time. The traffic monitor may be configured to determine one or more user experience metrics further by measuring a play time of the acquired video data, measuring a delay time of the acquired video data, and computing a video client network delay index of the acquired video data based on the measured delay time and the measured play time.

The historical content data may be historical web data. The traffic monitor may be configured to determine one or more user experience metrics by determining a normalized page unit time according to one or more measurements corresponding to time for rendering a pre-defined number of objects based on acquired historical web data. The predictor may be configured to acquire the expected quality of experience score by quantizing the one or more user experience metrics, and determining the expected quality of experience score of the acquired historical content data based on an established lookup table, wherein the established lookup table includes a predetermined quality of experience score corresponding to the quantized one or more user experience metrics for at least one time period.

The provided one or more traffic management optimization rules for current content data to the specific terminal may be based at least in part on network probes, remote authentication dial-in user service, policy charging and rules function, subscriber profile repository, application types, and network performance metrics including packet round trip time, packet retransmission rate, and bandwidth.

### BRIEF DESCRIPTION OF THE DRAWINGS

**FIG. 1** is a block diagram of an exemplary network system.
**FIG. 2** is a block diagram illustrating an embodiment of an exemplary adaptive traffic manager.
**FIG. 3** is a functional diagram of an exemplary cell level historical measurements database generation corresponding to the QoE predictor shown in FIG. 2.
**FIG. 4** is a flowchart representing an exemplary method of adaptive traffic management.
**FIG. 5** is a flowchart representing an exemplary method for predicting expected video QoE score.
**FIG. 6** is a flowchart representing an exemplary method for predicting expected web QoE score.
**FIG. 7** is a flowchart representing an exemplary method of cell level adaptive traffic management.

### DETAILED DESCRIPTION OF DRAWINGS

Reference will now be made in detail to the exemplary embodiments consistent with the embodiments disclosed herein, the examples of which are illustrated in the accompanying drawings. Wherever possible, the same reference numbers will be used throughout the drawings to refer to the same or like parts.

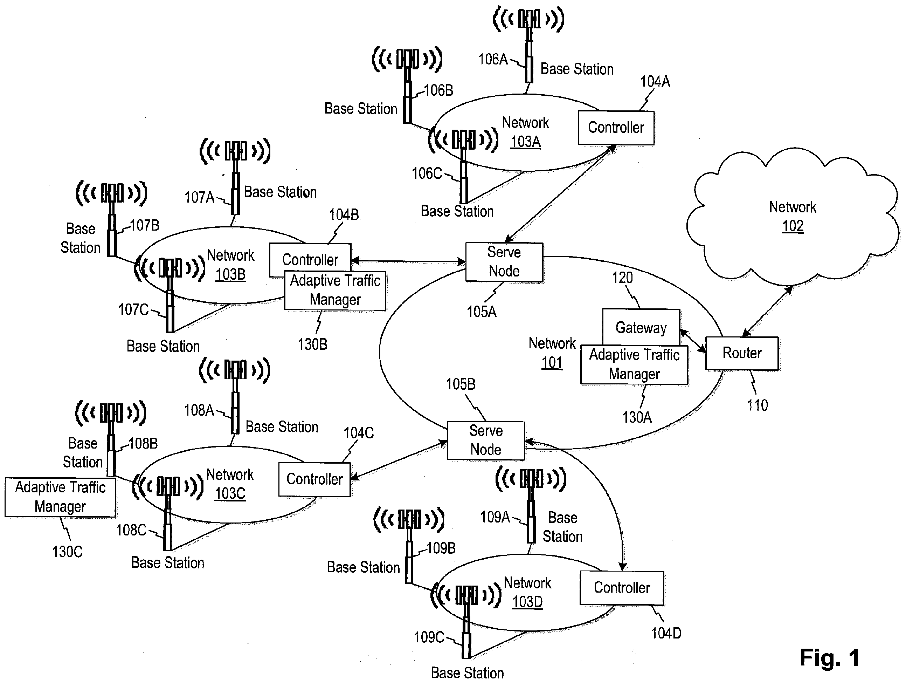

Network congestion or overload conditions in networks are often localized both in time and space and affect only a small set of users at any given time. This can be caused by the topology of communication systems. In an exemplary cellular communication system, such as the system shown in FIG. 1, the system can have a tree-like topology, with a router or a gateway being the root of the tree and the mobile base stations being the leaves. This tree-like topology is similar across cellular technologies including Global System for Mobile Communication (GSM), Universal Mobile Telecommunications System (UMTS) adopting Wideband Code Division Multiple Access (W-CDMA) radio access technology, CDMA2000, a Worldwide Interoperability for Microwave Access (WiMax) and Long Term Evolution (LTE). In a tree-like structure of a wireless network, the impact of network overload conditions depends on the level of aggregation in the network where that overload condition occurs. For example, an overload condition at a base station level affects only those users who are connected to that base station. Therefore, in some embodiments, the adaptive traffic management identifies the aggregation level at which an overload condition occurs and then apply traffic management techniques in a holistic fashion across only those users that are affected by the overload condition.

Adaptive traffic management, which is the subject matter of this application, is an approach wherein traffic management techniques such as web and video optimization can be applied selectively based on monitoring key indicators that have an impact on the Quality of Experience (QoE) of users or subscribers. A subscriber can be a mobile terminal user who subscribes to a wireless or cellular network service. While the subscriber refers to the mobile terminal user here, future references to subscriber can also refer to a terminal that is used by the subscriber.

**FIG. 1** is a block diagram of an exemplary network system. Exemplary system 100 can be any type of system that transmits data packets over a network. For example, the exemplary system 100 can include one or more networks transmitting data packets across wired or wireless networks to terminals (terminals not shown in **FIG. 1**). The exemplary system 100 can have network architectures of, for example, a GSM network, a UMTS network that adopts Wideband Code Division Multiple Access (W-CDMA) radio access technology, a CDMA2000 network, and a WiMax network.

The exemplary system 100 can include, among other things, one or more networks 101, 102, 103(A-D), one or more controllers 104(A-D), one or more serving nodes 105(A-B), one or more base stations 106(A-D)-109(A-D), a router 110, a gateway 120, and one or more adaptive traffic managers 130(A-C). At a high level, the network topology of the exemplary system 100 can have a tree-like topology with gateway 120 being the tree's root node and base stations 106-109 being the leaves.

Router 110 is a device that is capable of forwarding data packets between networks, creating an overlay internetwork. Router 110 can be connected to two or more data lines from different networks. When a data packet comes in on one of the lines, router 110 can determine the ultimate destination of the data packet and direct the packet to the next network on its journey. In other words, router 110 can perform "traffic directing" functions. In the exemplary embodiment shown in **FIG. 1**, router 110 communicates with network 102 and gateway 120. Router 110 directs traffic from the network 102 to the gateway 120 and vice versa.

Network 101 can be any combination of radio network, wide area networks (WANs), local area networks (LANs), or wireless networks suitable for packet-type communications, such as Internet communications. For example, in one exemplary embodiment, network 101 can be a General Packet Radio Service (GPRS) core network, which provides mobility management, session management and transport for Internet Protocol packet services in GSM and W-CDMA networks. The exemplary network 101 can include, among other things, a gateway 120, and one or more serving nodes 105(A-B).

Gateway 120 is a device that converts formatted data provided in one type of network to a particular format required for another type of network. Gateway 120, for example, may be a server, a router, a firewall server, a host, or a proxy server. Gateway 120 has the ability to transform the signals received from router 110 into a signal that network 101 can understand and vice versa. Gateway 120 may be capable of processing webpage, image, audio, video, and T.120 transmissions alone or in any combination, and is capable of full duplex media translations. As an exemplary embodiment, gateway 120 can be a Gateway GPRS Support Node (GGSN) that supports interworking between the GPRS network and external packet switched networks, like the Internet and X.25 networks.

Serving nodes 105 are devices that deliver data packets from gateway 120 to a corresponding network 103 within its geographical service area and vice versa. A serving node 105 can be a server, a router, a firewall server, a host, or a proxy server. A serving node 105 can also have functions including packet routing and transfer, mobility management (attach/detach and location management), logical link management, network accessing mediation and authentication, and charging functions. As an exemplary embodiment, a serving node 105 can be a Serving GPRS Support Node (SGSN). SGSN can have location register, which stores location information, e.g., current cell, current visitor location (VLR) and user profiles, e.g., International Mobile Subscriber Identity (IMSI), and addresses used in the packet data network, of all GPRS users registered with this SGSN.

Network 102 can include any combination of wide area networks (WANs), local area networks (LANs), or wireless networks suitable for packet-type communications. In some exemplary embodiments, network 102 can be, for example, Internet and X.25 networks. Network 102 can communicate data packet with network 101 with or without router 110.

Networks 103 can include any radio transceiver networks within a GSM or UMTS network or any other wireless networks suitable for packet-type communications. In some exemplary embodiments, depending on the underlying transport technology being utilized, the Radio Access Network (RAN) or Backhaul area of network 103 can have a ring topology. In some embodiments, network 103 can be a RAN in a GSM system or a Backhaul area of a UMTS system. The exemplary network 103 can include, among other things, base stations 106-109 (e.g., base transceiver stations (BTSs) or Node-Bs), and one or more controllers 104(A-C) (e.g., base-station controllers (BSCs) or radio network controllers (RNCs)). Mobile terminals (not shown in **FIG. 1**) communicate with BTS/Node-B 106-109 which have radio transceiver equipment. BTS/Node-B 106-109 communicate with BSC/RNC 104(A-C), which are responsible for allocation of radio channels and handoffs as users move from one cell to another. The BSC/RNC 104(A-C) in turn communicate to serving nodes 105, which manage mobility of users as well as provide other functions such as mediating access to the network and charging.

As shown in **FIG. 1**, adaptive traffic manager 130 can be deployed at one or more locations within communication system 100, including various locations within network 101 and 103. In some embodiments, adaptive traffic manager 130 can be located at gateway 120, at controller 104, at one or more base stations 106-109, or any other proper locations. Adaptive traffic manager 130 can be either a standalone network element or can be integrated into existing network elements such as gateway 120, controllers 104, and base stations 106-109. Adaptive traffic manager 130 can continuously monitor several parameters of communication system 100. The parameters can be used to generate traffic management rules. The traffic management rules are generated dynamically and change in real-time based on the monitored parameters. After the rules are generated in real time, the rules are applied to data traffic being handled by adaptive traffic manager 130.

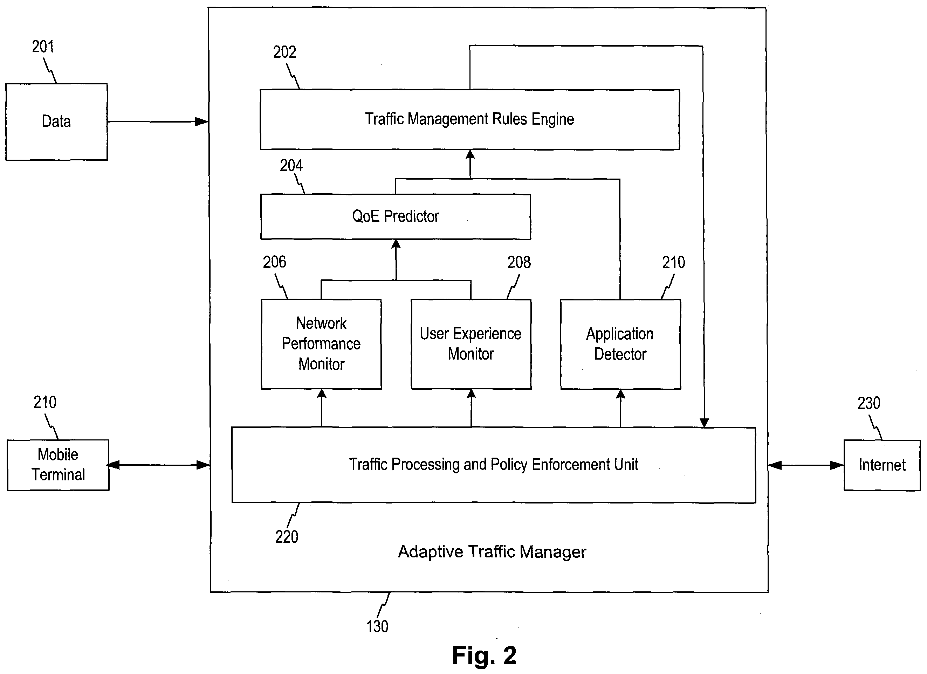

**FIG. 2** is a block diagram illustrating an embodiment of an exemplary adaptive traffic manager. Adaptive traffic manager 130 can include, among other things, a traffic management rule engine 202, a QoE predictor 204, a network performance monitor 206, a user experience monitor 208, an application detector 210, and a traffic processing and policy enforcement unit 220. Adaptive traffic manager can have one or more processors and at least one memory for storing program instructions. The processor(s) can be a single or multiple microprocessors, field programmable gate arrays (FPGAs), or digital signal processors (DSPs) capable of executing particular sets of instructions. Computer-readable instructions can be stored on a tangible non-transitory computer-readable medium, such as a flexible disk, a hard disk, a CD-ROM (compact disk-read only memory), and MO (magneto-optical), a DVD-ROM (digital versatile disk-read only memory), a DVD RAM (digital versatile disk-random access memory), or a semiconductor memory. Alternatively, the methods can be implemented in hardware components or combinations of hardware and software such as, for example, ASICs, special purpose computers, or general purpose computers.

Adaptive traffic manager 130 can obtain external data 201 for processing. External data 201 can include network probes, Remote Authentication Dial-In User Service (RADIUS), Policy Charging and Rules Function (PCRF), and Subscriber Profile Repository (SPR). Adaptive traffic manager 130 can also communicate with one or more terminals (e.g., terminal 210) and Internet 230, either directly or indirectly.

Traffic processing and policy enforcement (TPPE) 220 is a lower stack in the processing stack of adaptive traffic manager 130. TPPE 220 receives content data, which can include video and/or web data, and provide the content data to other components and/or modules in adaptive traffic manager 130. This content data, which can later be used for calculating a QoE score, can be stored in a database (not shown) that is local to or remote from adaptive traffic manager 130. TPPE 220 is responsible for routing traffic between mobile terminal 210 and the Internet 230. TPPE 220 also implements traffic management techniques including blocking, rate limiting, lossless and lossy data compression, and other traffic optimization techniques. TPPE 220 can be a software program and/or a hardware device.

Network performance monitor 206 continuously monitors the data traffic routed by the TPPE 220 and provides real-time network performance measurements. Network performance measurements include, among other things, packet round trip time (RTT), packet retransmission rate, and bandwidth. In some embodiments, the continuous monitoring includes periodically monitoring of digitized packet-type data traffic. Network performance monitor 206 monitors the data traffic for multiple history periods, which are counted by network performance counters. In some embodiments, network performance counters are maintained separately for each subscriber. In some embodiments, for example, the network performance monitor 206 monitors the data traffic for five history periods at 60 seconds, 120 seconds, 180 seconds, 240 seconds, and 300 seconds. In other embodiments, other choices of history periods can be used as well. Network performance monitor 206 can be a software program and/or a hardware device.

User experience monitor 208 calculates and stores user experience metrics. In some embodiments, the experience metrics can be calculated and stored for each subscriber at multiple history periods. The user experience metrics include, among other things, a Video Playback Smoothness Index, a Video Client Network Delay Index, a normalized page unit time, and any other user experience metrics. In some embodiments, the user experience metrics also include the amount of time that the bitrate of a previously transmitted video was lowered due to Adaptive Bitrate Management. Embodiments of the Adaptive Bitrate Management are further described in U.S. Patent Nos. 7,987,285 and 7,991,904, which are herein incorporated by reference. In some embodiments, for example, user experience monitor 208 calculates and stores user experience metrics for five history periods at 60 seconds, 120 seconds, 180 seconds, 240 seconds, and 300 seconds. In some other embodiments, other choices of history periods can be used as well. User experience monitor 208 can be a software program and/or a hardware device.

Application detector 210 inspects data traffic routed by TPPE 220 between terminal 210 and the Internet 230 and identifies the application or category associated with each flow. Application detector 210 can identify whether a particular flow includes webpage content such as image or text, or whether the flow includes video data. Application detector 210 can also identify a particular flow as being peer-to-peer traffic based on the BitTorrent or other similar file sharing protocols. Application detector 210 can be a software program and/or a hardware device.

QoE predictor 204 predicts the expected QoE scores, such as expected video and web QoE scores. The QoE score can be a numerical value, a grade (e.g. A, B, C, etc.) or an index, etc. An expected video QoE score is obtained based on historical measurements of several parameters associated with the playing of the video clips, further explained below. An expected web QoE score is obtained based on historical measurements of several parameters associated with rendering web pages, further explained below. In some embodiments, QoE scores can be predicted for each subscriber at any given time. QoE predictor 204 generates the QoE scores based in part on input received from network performance monitor 206 and user experience monitor 208. QoE predictor 204 can obtain low-level network performance measurements from network performance monitor 206. QoE predictor 204 can also obtain higher-level user experience metrics associated, for example, with the subscriber's past experience of video and web browsing, from user experience monitor 208. The expected QoE scores are generated by QoE predictor 204 based on real-time network performance measurements, user experience metrics and other performance indicators. QoE predictor 204 can be a software program and/or a hardware device.

In some embodiments, QoE predictor 204 is not limited to the network performance measurements and the user experience metrics inputs. In some embodiments, the input data can comprise one or more measurements that may be obtained locally at the adaptive traffic manager 130. Each measurement data can also take many different values depending on the nature of the measurement. For example, packet round trip time measurements can also be used for the QoE prediction. The packet round trip time can be mapped to discrete ranges such as 0 to t₁, t₁ to t₂, t₂ to t₃ and so on. Subsequently, the packet round trip time can be quantized to different values according to the mapping scheme. Similarly, other measurements can also be used for QoE prediction and mapped to their corresponding discrete ranges as well. The discrete ranges for each measurement can be based on historical data and can be designed in any desired manner.

After all the measurements for QoE prediction are mapped and each measurement is quantized, a finite-size prediction lookup table can be created correlating a combination of the measurements to a QoE score. This lookup table can be stored on a database (not shown) that is local to or remote from adaptive traffic manager 130. The initial prediction lookup table with the measurements ranges and QoE scores can be pre-configured or populated dynamically by a real-time statistical analysis of the traffic flowing through an adaptive traffic manager. For example, the pre-configured prediction lookup table values in adaptive traffic manager 130 can be based on offline statistical analysis of traffic data from communication system 100. Alternatively, the prediction lookup tables can start with the pre-configured values and then be updated dynamically over time as adaptive traffic manager 130 processes live subscriber traffic.

In some exemplary embodiments, the QoE prediction may be further based on types of use cases in the traffic. Use cases can include, for example, watching video clips and web site browsing. Therefore, separate QoE prediction on video watching and web site browsing can be implemented. It is easily appreciated by those skilled in the art that QoE prediction may be based on any other use cases as well.

In an example of a video watching use case, one QoE measurement includes whether stalling occurred during the playing of a video clip. Video stalling occurs when the bitrate of the video is greater than the bandwidth available between the mobile client and the video server. In some embodiments, a video QoE score can be assigned according to video stalling. For example, if a video stalling occurs, a "0" may be assigned to the video QoE score; and if no video stalling occurs, a "1" may be assigned to the video QoE score. The video QoE score assignment can also be defined in many other ways. For example, the video QoE score can be based on the actual amount of stalling time relative to the play time of video and this would result in values between "0" and "1." The computation of video QoE score can be based on other measurement types in addition to video stalling. For example, measurements such as bitrate, frame size, and frame rate can also be used to compute the overall video QoE score.

In some embodiments, video QoE scores are computed based on historical measurements of two parameters, namely, the Video Playback Smoothness Index and the Video Client Network Delay Index. The Video Playback Smoothness Index is a normalized counter and measures the amount of time stalling occurs relative to the play time of the media. As an example, the Video Playback Smoothness Index for a video transaction is defined as the ratio between the media time and the sum of the media time and the stalling time, i.e., Video Playback Smoothness Index = (media time)/((media time + stalling time)). The stalling time is computed based on the relation of video processing time and the media play time. The video processing time is the actual wall-cock time taken to process the video clip. As an example, if the media play time is greater or equal to the video processing time, the stalling time is assigned a value "0." If the media play time is less than the video processing time, the stalling time equals to the difference between the processing time and the media time, i.e., stalling time = processing time - media time). The Video Playback Smoothness Index may range between 0 and 1; with a larger value indicates a better experience and the maximum score of 1 means that no video stalling occurred. In some embodiments, the Video Playback Smoothness Index can be tracked separately for each active subscriber with five history periods of 60 seconds, 120 seconds, 180 seconds, 240 seconds and 300 seconds. The history period refers to the amount of time history going back from the current time. For example, the Video Playback Smoothness Index with a history period of 60 seconds is the average value of the index computed using the video clips that end within the last 60 seconds from the current time.

The Video Client Network Delay Index is measured at adaptive traffic manager 130 when video data is sent to a terminal 210. The Video Client Network Delay Index is calculated based on the client delay time and the media play time. As an example, Video Client Network Delay Index is defined as the ratio of the client delay time and the media time, i.e., Video Client Network Delay Index= (client delay time)/(media time). The client delay time in the formula above is equal to the amount of time adaptive traffic manager 130 is blocked from sending video data to a terminal because of network congestion or any other overload conditions. Similar to the Video Playback Smoothness Index, the Video Client Network Delay Index can be tracked separately for each subscriber with, for example, five history periods of 60 seconds, 120 seconds, 180 seconds, 240 seconds and 300 seconds. The Video Client Network Delay Index is computed at the end of each video clip watched by a subscriber. If there are multiple video clips that end during a given history period, then the average across all the video clips may be used as the Video Client Network Delay Index corresponding to that history period.

In some embodiments, after five Video Playback Smoothness Index values and five Video Client Network Delay Index values corresponding to the five history time periods are tracked, a total of ten measurements are obtained for video QoE prediction. In these embodiments, each of the Video Playback Smoothness and the Video Client Network Delay Index values is further quantized by assigning one of two possible discrete values. For example, Video Playback Smoothness Index may be quantized as less than 1 or equal to 1; while the Video Client Network Delay Index may be quantized as less than or equal to 2% or greater than 2%. It is easily appreciated by those skilled in the art, however, that any other type of quantization may be assigned to the Indexes. For example, more than two discrete values may be used for the Video Playback Smoothness and Video Client Network Delay Index values. Depending on the type of quantization, the Video Playback Smoothness Index can be assigned three different values such as "0," "1/2", and "1;" and the Video Client Network Delay Index can be assigned three different values such as "0%-2%," 2%-10%," and ">10%."

In the embodiments that can generate two discrete values for five history periods are obtained, ten measurements are available for a QoE prediction and each measurement can only belong to two possible ranges as described above. The total number of combinations of measurement values and thus the size of the prediction lookup table is calculated to be 1024 (two Indexes having ten measurement values each gives 2¹⁰ = 1024). The size of the prediction lookup table can be either increased or reduced as desired. For example, the size of the predication table can be reduced by limiting the table entries to Index values measured from the same history period for both the Video Playback Smoothness Index and the Video Client Network Delay Index values. As a result, for example, the combination of Video Playback Smoothness Index with a history period of 60 seconds and Video Client Network Delay Index with a history period of 120 seconds would not be stored in the prediction lookup table. Or the combination of Video Playback Smoothness Index with a history period of 120 seconds and Video Client Network Delay Index with a history period of 180 seconds would not be stored as well. Using this approach, the size of the prediction lookup table can be reduced to 20. One additional entry for the case where no history is available for a subscriber within the most recent 300 seconds can be added to the table. On the other hand, the size of the table can be increased, for example, taking a more precise quantization of the measurements or taking more types of measurement.

An exemplary video QoE prediction lookup table corresponding to the above exemplary embodiment is shown in Table 1 below.

**Table 1. An exemplary video QoE prediction lookup table**

| **Inputs** | | | **Output** |
|---|---|---|---|
| **History Time (seconds)** | **Video Playback Smoothness Index** | **Video Client Network Delay Index** | **Expected QoE Score** |
| 60 | < 1 | > 2% | VQoE(60, 1) |
| 60 | < 1 | <= 2% | VQoE(60, 2) |
| 60 | = 1 | > 2% | VQoE(60, 3) |
| 60 | = 1 | <= 2% | VQoE(60, 4) |
| 120 | < 1 | > 2% | VQoE(120, 1) |
| 120 | < 1 | <= 2% | VQoE(120, 2) |
| 120 | = 1 | > 2% | VQoE(120, 3) |
| 120 | = 1 | <= 2% | VQoE(120, 4) |
| 180 | < 1 | > 2% | VQoE(180, 1) |
| 180 | < 1 | <= 2% | VQoE(180, 2) |
| 180 | = 1 | > 2% | VQoE(180, 3) |
| 180 | = 1 | <= 2% | VQoE(180, 4) |
| 240 | < 1 | > 2% | VQoE(240, 1) |
| 240 | < 1 | <= 2% | VQoE(240, 2) |
| 240 | = 1 | > 2% | VQoE(240, 3) |
| 240 | = 1 | <= 2% | VQoE(240, 4) |
| 300 | < 1 | > 2% | VQoE(300, 1) |
| 300 | < 1 | <= 2% | VQoE(300, 2) |
| 300 | = 1 | > 2% | VQoE(300, 3) |
| 300 | = 1 | <= 2% | VQoE(300, 4) |
| 300 | N/A | N/A | VQoE(No History) |

In the exemplary video QoE prediction lookup table shown in table 1, the first three columns are the input measurements to the prediction lookup table and the last column is the output predicted video QoE score. The first column in the table corresponds to the history time period during which the measurements of the input variables are made. The second and third columns correspond to range of measurement values for the Video Playback Smoothness Index and Video Client Network Delay Index, respectively. The output of the prediction lookup table shown in the last column of the table is the expected video QoE score for each combination of input measurements. For example, referring to the first row in Table 1, the value VQoE(60, 1) is the expected video QoE score when the measured Video Playback Smoothness Index in the last 60 seconds is less than one, and the measured Video Client Network Delay Index in the last 60 seconds is greater than 2%.

It is understood by those skilled in the art that the actual values of the expected video QoE scores shown in the last column of Table 1 will depend on various factors such as the characteristics of the communication system, wireless network, type of devices used by subscribers, and so on. Adaptive traffic manager 130 can have pre-configured initial values for the expected video QoE scores and can dynamically adjust these values as it processes live subscriber traffic. The last row in Table 1 corresponds to the case where no historical data is available for a subscriber in the most recent time interval spanning across a maximum time period, for example, 300 seconds. When historical data is available, the Video Playback Smoothness Index indicates whether video stalling was encountered while the subscriber was watching the video clip and the Video Client Network Delay Index indicates if any client delay was observed at the adaptive traffic manager 130 when video data is sent to the terminal. Thus, the expected video QoE score computed based on the Video Playback Smoothness and Video Client Network Delay Indexes can predict the likelihood or probability that a subscriber will have a smooth or stalling-free playback if they were to watch a video clip at any given time.

In the use case of website browsing, a web QoE score measures the Quality of Experience of a user when that user browses web pages over the internet. One of the determinants of the web QoE is the time it takes to load a web page for browsing. But the time to load a web page depends on the complexity of the page. Web pages are composed of markup content providing the framework for the layout of the page, and embedded objects such as images. Adaptive traffic manager 130 computes the web QoE score for a subscriber based on a normalized page unit time averaged over the time interval of observation. The normalized page unit time is correlated with the time to load a typical web page with a fixed number of objects. An exemplary method for measuring web browsing QoE is described in detail in a concurrently filed U.S. non provisional Application No. 13/436,671 titled "Measuring Web Browsing Quality of Experience in Real-Time at an Intermediate Network Node".

In some embodiments, the web QoE score is predicted to be "0" if the normalized page unit time is greater or equal to a threshold value. In contrast, the web QoE score is predicted to be "1" if the normalized page unit time is less than a threshold value. The threshold value determines if the user experience of web browsing is good or bad and can be configured to any desirable value to be used in adaptive traffic manager 130. It is easily appreciated by those skilled in the art that the web QoE scores may not be limited to 0 and 1. Rather, the web QoE scores can be any values and can be defined by multiple ranges for the normalized page unit time instead of using a single threshold value. Similar to the Video Playback Smoothness and Video Client Network Delay Indexes, in some embodiments, the normalized page unit time can be measured separately for each subscriber with five history periods of 60 seconds, 120 seconds, 180 seconds, 240 seconds and 300 seconds.

In some embodiments, the normalized page unit time values for each subscriber can be quantized into six levels or groups in order to control the size of the prediction lookup table. Table 2 shows an exemplary six-level quantization for the normalized page unit time. It is easily appreciated by those skilled in the art, however, that the quantization levels are not limited to six and rather can be any number of levels that is desired.

**Table 2. Exemplary Quantization levels for the normalized page unit time**

| **Quantization Level** | **Normalized Page Unit Time Range (seconds)** |
|---|---|
| Level 1 | 0 ≤ t < 8 |
| Level 2 | 8 ≤ t < 10 |
| Level 3 | 10 ≤ t < 12 |
| Level 4 | 12 ≤ t < 15 |
| Level 5 | 15 ≤ t < 20 |
| Level 6 | t ≥ 20 |

After the normalized page unit time is quantized and history periods are defined, the web QoE prediction lookup table can be created. An exemplary web QoE prediction lookup table with five history times and six quantization levels for the normalized page unit time values is shown in Table 3. Similar to that in Table 1, the last row in Table 3 represent the case where there is no historical data available for a subscriber in the most recent 300 seconds in this exemplary embodiment.

**Table 3: An exemplary web QoE prediction lookup table.**

| **History Time (seconds)** | **Normalized Page Unit Time** | **Expected Web QoE Score** |
|---|---|---|
| 60 | 0 ≤ t < 8 | WQoE(60,1) |
| 60 | 8 ≤ t < 10 | WQoE(60,2) |
| 60 | 10 ≤ t < 12 | WQoE(60,3) |
| 60 | 12 ≤ t < 15 | WQoE(60,4) |
| 60 | 15 ≤ t < 20 | WQoE(60,5) |
| 60 | t ≥ 20 | WQoE(60,6) |
| 120 | 0 ≤ t < 8 | WQoE(120,1) |
| 120 | 8 ≤ t < 10 | WQoE(120,2) |
| 120 | 10 ≤ t < 12 | WQoE(120,3) |
| 120 | 12 ≤ t < 15 | WQoE(120,4) |
| 120 | 15 ≤ t < 20 | WQoE(120,5) |
| 120 | t ≥ 20 | WQoE(120,6) |
| 180 | 0 ≤ t < 8 | WQoE(180,1) |
| 180 | 8 ≤ t < 10 | WQoE(180,2) |
| 180 | 10 ≤ t < 12 | WQoE(180,3) |
| 180 | 12 ≤ t < 15 | WQoE(180,4) |
| 180 | 15 ≤ t < 20 | WQoE(180,5) |
| 180 | t ≥ 20 | WQoE(180,6) |
| 240 | 0 ≤ t < 8 | WQoE(240,1) |
| 240 | 8 ≤ t < 10 | WQoE(240,2) |
| 240 | 10 ≤ t < 12 | WQoE(240,3) |
| 240 | 12 ≤ t < 15 | WQoE(240,4) |
| 240 | 15 ≤ t < 20 | WQoE(240,5) |
| 240 | t ≥ 20 | WQoE(240,6) |
| 300 | 0 ≤ t <8 | WQoE(300,1) |
| 300 | 8 ≤ t < 10 | WQoE(300,2) |
| 300 | 10 ≤ t < 12 | WQoE(300,3) |
| 300 | 12 < t < 15 | WQoE(300,4) |
| 300 | 15 ≤ t < 20 | WQoE(300,5) |
| 300 | t ≥ 20 | WQoE(300,6) |
| 300 | N/A | WQoE(No History) |

The values in the last column of Table 3 are the expected web QoE scores for each combination of history time and normalized page unit time values. For example, WQoE(60, 1) is the expected QoE score when the normalized page unit time, measured in the most recent 60 seconds, is between 0 and 8 seconds. These actual values of the expected web QoE scores for different combinations of history time and normalized page unit time can depend on several parameters such as the characteristics of the communication system, the wireless network and type of device used by end users. In some embodiments, adaptive traffic manager 130 can maintain separate web QoE prediction lookup tables for different device classes such as laptops, smart phones, tablets, e-book readers, handheld device, and other mobile devices.

Traffic management rules engine (TMRE) 202 can process data from disparate sources including the QoE score provided by the QoE predictor 204. TMRE 202 can processes external data 201 as well as data generated locally inside the adaptive traffic manager 130 in a holistic fashion. TMRE 202 can generate dynamic traffic management rules that can maximize the user experience across all subscribers and are consistent with policies set by the wireless operator. Some data that TMRE 202 processes can be collected or computed locally at adaptive traffic manager 130. TMRE 202 can also use external data 201, which is obtained from other entities in the communication system 100. Some exemplary types of data that TMRE 202 can process include, among other things, historical per-subscriber QoE scores, network performance metrics, network probes, RADIUS, PCRF, SPR, and application detector result.

In some embodiments, network performance metrics are measured locally at adaptive traffic manager 130. The network performance metrics are provided by network performance monitor 206 and may include, among other things, packet round trip time (RTT), packet retransmission rate, and bandwidth. In some embodiments, these network performance metrics are computed for each subscriber.

Application types may be detected and used as an input to the TMRE 202. In some embodiments, application detector 210 inspects data packets from all subscribers and detects the specific applications being used by each subscriber. The identity of the applications being used by each subscriber is passed to TMRE 202, which can generate the application specific traffic management rules for each subscriber. Thus, the adaptive traffic manager has the capability of managing traffic for each subscriber or even specific application of the subscriber.

In some embodiments, TMRE 202 may also process network probes, as one exemplary type of data 201. Network probes are external nodes that are developed by third-party vendors and are typically deployed in the RAN segment of a wireless network. Network probes passively monitor the signaling and data traffic in the wireless network and can detect changes in a subscriber's location as they move from one location to another. Network probes can also send both user location information as well as network load information to adaptive traffic manager 130.

In some embodiments, TMRE 202 can also process data from Remote Authentication Dial-In User Service RADIUS, PCRF, and SPR, as other exemplary types of data 201. Adaptive traffic manager 130 can have access to various subscriber attributes, such as the rate plan, from RADIUS, PCRF, and SPR in the wireless carrier's network. Depending on the type of server, external data 201 can either be pushed to adaptive traffic manager 130 from the server, or pulled from the server by adaptive traffic manager 130. In some exemplary embodiments, for example with RADIUS feeds, subscriber's location information can be provided.

In some embodiments, TMRE 202 can process data from one or more of the sources described above or any other sources. TMRE 202 generates dynamic traffic management rules to be consumed by the TPPE 220.

In some embodiments, QoE predictor 204 can predict QoE scores indicating whether a single subscriber will have a good or bad Quality of Experience (QoE) for each active subscriber at any given time. In these embodiments, QoE predictor 204 in adaptive traffic manager 130 computes and stores QoE scores for each subscriber. Based on the predicted QoE score, TMRE 202 dynamically updates the traffic management rules in an attempt to maximize an overall QoE score for each subscriber across all active subscribers. The QoE scores can be computed based on the knowledge of the applications being used by each use case - for example video watching or web sites browsing. The QoE scores for each subscriber from the near recent past can be passed to TMRE 202 in real time.

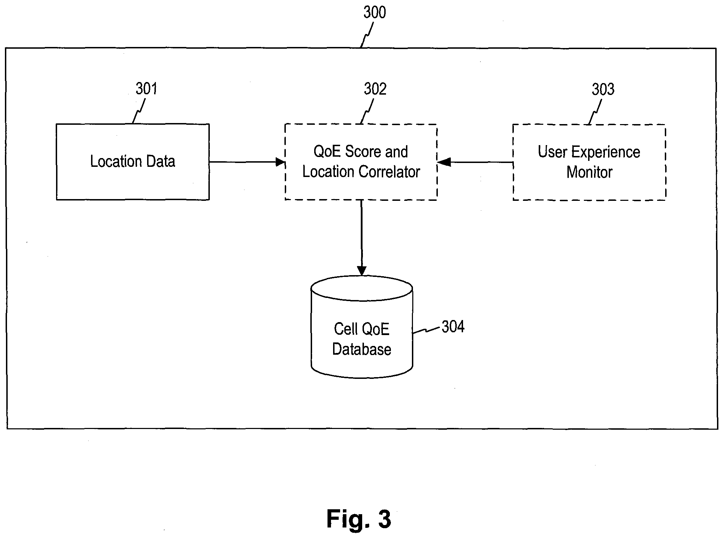

**FIG. 3** is a functional diagram of an exemplary cell level historical measurements database generation corresponding to the QoE predictor shown in **FIG. 2**. The cell level database (e.g. database 304) can be maintained at the base-station level (e.g., base station 106-109 in FIG. 1) or at the sector level within each base station if the base station is sectorised. A sectorised base station (e.g., a six-sector base station) can have each sectors served by a different antenna for a separate direction. In some exemplary embodiments, when subscriber location data 301 is available via, for example, network probes or RADIUS feeds, adaptive traffic manager 130 can maintain a cell historical measurements database 304 for each cell location. Cell historical measurements database 304, for example, can be located within QoE predictor 204 as shown in FIG. 2. Database 304 can also be integrated into user experience monitor 208.

The historical measurements stored in database 304 can include measurements of parameters associated with playing of the video clips, such as the Video Playback Smoothness Index and the Video Client Network Delay Index. The historical measurements stored in database 304 can also include measurements of parameters associated with rendering of web pages, such as the normalized page unit time. Thes cell historical measurements database 304 is updated in real time based on monitoring of user experience metrics provided by user experience monitor 208 and monitoring of network performance parameters by the network performance monitor 206.

User experience monitor 208 calculates and stores user experience metrics. The user experience metric include, among other things, a Video Playback Smoothness Index, a Video Client Network Delay Index, a normalized page unit time, and any other user experience metrics. Network performance monitor 206 continuously monitors the data traffic routed by the TPPE 220 shown in **FIG. 2** and provides real-time network performance measurements. Network performance measurements include, among other things, packet round trip time (RTT), packet retransmission rate, and bandwidth.

For each subscriber, the historical measurement and location correlator 302 correlates the location data 301 with historical measurements of parameters including the user experience metrics calculated by the user experience monitor 208 and network performance parameters provided by the network performance monitor 206. The correlated historical measurements are stored in cell historical measurement database 304. Cell level aggregation of correlated historical measurements can be used to implement advanced traffic management techniques.

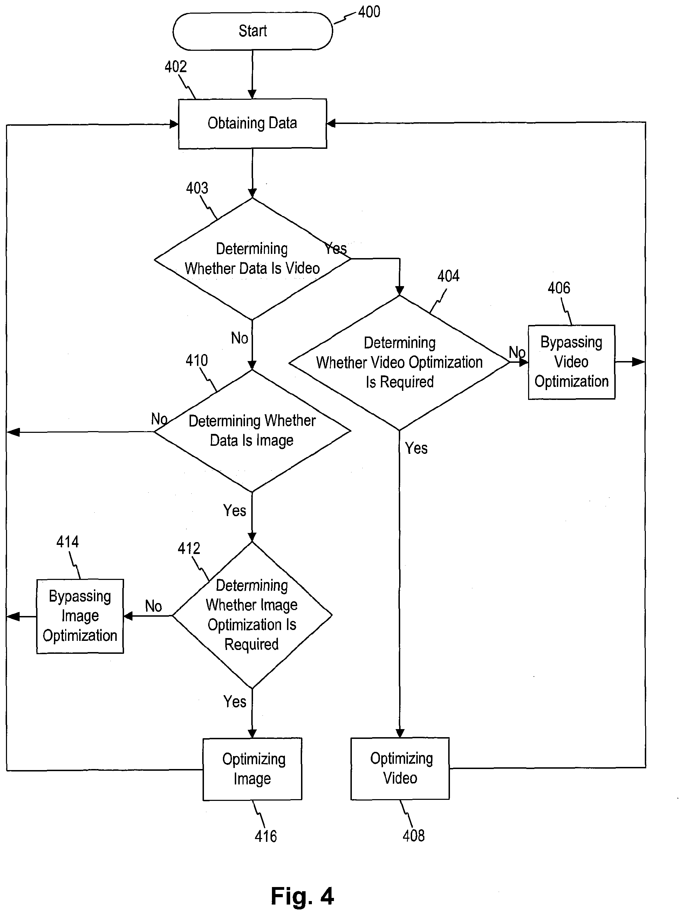

**FIG. 4** is a flowchart representing an exemplary method of adaptive traffic management. Referring to **FIG. 4**, it will be readily appreciated by one of ordinary skill in the art that the illustrated procedure can be altered to delete steps or further include additional steps. After initial step 400, an adaptive traffic manager obtains (402) data for processing. The data can be any packet type communication in a communication system, including web browsing traffic and video streaming traffic, obtained locally or externally.

After obtaining the data, the adaptive traffic manager (e.g., adaptive traffic manager 130) determines (403) whether the obtained data includes video data. If the adaptive traffic manager determines there is video data in the traffic, it further determines (404) whether video optimization is required. In some embodiments, for example, video optimization is required when an expected video QoE score falls below a pre-configured threshold. The pre-configured threshold can be set such that when an expected video QoE score falls below it, there is a probability that a user may experience video stalling. If the adaptive traffic manager determines that video optimization is not required, for example, because the expected video QoE score is above or equal to a configured threshold, it bypasses (406) video optimization and goes back to step 402 to obtain additional data for processing. But if the expected video QoE score falls below a pre-configured threshold, the adaptive traffic manager then optimizes (408) video data. Video optimization can include any of the techniques supported in the adaptive traffic manager such as reducing the frame rate, picture quality, and frame resolution.

On the other hand, if the adaptive traffic manager determines there is no video data from the obtained data, it further determines (410) whether image data is present. If there is image data, for example, from the web browsing traffic, the adaptive traffic manager then determines (412) whether image optimization, such as image compression, is required. In some embodiments, for example, an image optimization is required when an expected web QoE score falls below a configured threshold. If the adaptive traffic manager determines that image optimization is not required, for example, because the expected web QoE score is above or equal to a configured threshold, it bypasses (414) image optimization and goes back to step 402 to obtain additional data for processing. But if the expected web QoE score falls below a configured threshold, the adaptive traffic manager then optimizes (416) the image data. Image optimization techniques can include any of the techniques supported in the adaptive traffic manager such as transcoding images at a lower quality level as compared to the original.

It will be readily appreciated by one of ordinary skill in the art that this exemplary method of adaptive traffic management can be implemented at any level within the communication system. It is further appreciated that if adaptive traffic management is applied at the subscriber level, each subscriber can be handled individually and the Quality of Experience of one subscriber has no impact on that of any other subscriber. It will also be readily appreciated by one of ordinary skill in the art that although the exemplary flowchart shown in **FIG. 4** treated video and web browsing (image) separately, the adaptive traffic manager can be configured to look at the expected web and video QoE scores jointly and activate web and video optimization for a subscriber when either of the expected QoE scores is below configured thresholds.

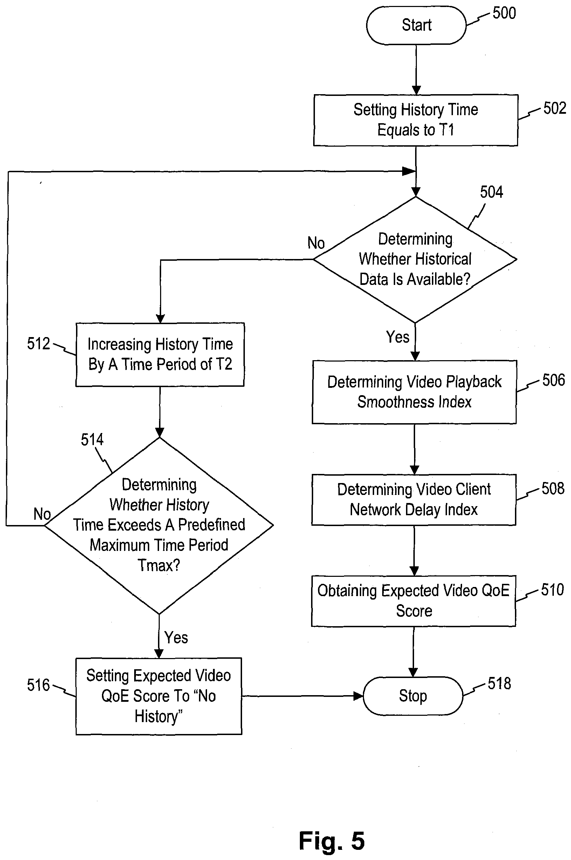

**FIG. 5** is a flowchart representing an exemplary method for predicting expected video QoE score. Referring to **FIG. 5**, it will be readily appreciated by one of ordinary skill in the art that the illustrated procedure can be altered to delete steps or further include additional steps. After initial step 500, an adaptive traffic manager (e.g., adaptive manager 130) sets (502) the history time equal to a preconfigured time period T₁, which can be any desired time period. For example, this time period could be for 60 seconds (similar to the 60-second inputs under Table 1).

The adaptive traffic manager then determines (504) whether historical data for the time period T₁ is available. If the data is determined to be available, the adaptive traffic manager further determines (506) a Video Playback Smoothness Index by retrieving the historical measurements of the Video Playback Smoothness Index corresponding to this history time period T₁. The Video Playback Smoothness Index is a normalized counter and measures the amount of time that stalling occurs relative to the media play time. Next, the adaptive traffic manager determines (508) the Video Client Network Delay Index by retrieving the historical measurements of the Video Client Network Delay corresponding to this history time period T₁. The Video Client Network Delay Index measures the amount of the time an adaptive traffic manager is blocked from sending video data to a terminal because of network congestion or any other overload conditions, in relation to the media play time. After both Indexes are determined, the adaptive traffic manager obtains (510) expected video QoE score by retrieving it from, for example, a prediction lookup table. In some embodiment, the expected video QoE score can also be computed using an algorithm that considers the user experience metrics. After providing step 510, the method can proceed to end 518. The method described in **FIG. 5****,** for predicting expected video QoE score, can be an exemplary embodiment of step 404 in **FIG. 4**.

On the other hand, if the adaptive traffic manager determines (504) that there is no historical data available for the time period T₁, it increases (512) the history time by a time period of T₂. For example, this time period could be for 120 seconds (similar to the 120-second inputs under Table 1). In some embodiments, the time period T₁ and time period T₂ may or may not be the same. For example, time period T₁ could be 60 seconds, while time period T₂ could be for 30 seconds.

After the history time has been increased, the adaptive traffic manager determines (514) whether the history time exceeds a predefined maximum time period of Tₘₐₓ. If the time period is less than or equal to Tₘₐₓ, the adaptive traffic manager repeats the procedure from step 504. But if the time period is greater than Tₘₐₓ, the adaptive traffic manager sets (516) expected video QoE score to "No History" and can proceed to end 518. The expected video QoE score is set to "No History" when no historical measurement is available for the maximum time period Tₘₐₓ. In some embodiments, if expected video QoE score is set to "No History," the adaptive traffic manager (e.g., adaptive traffic manager 130) can obtain expected QoE score from other sources, such as a pre-stored back-up QoE score. It will be readily appreciated by one of ordinary skill in the art that this exemplary method of adaptive traffic management can be implemented at any level within the communication system. It is further appreciated that if adaptive traffic management is applied at the subscriber level, each subscriber can be handled individually and the QoE of one subscriber has no impact on that of any other subscriber.

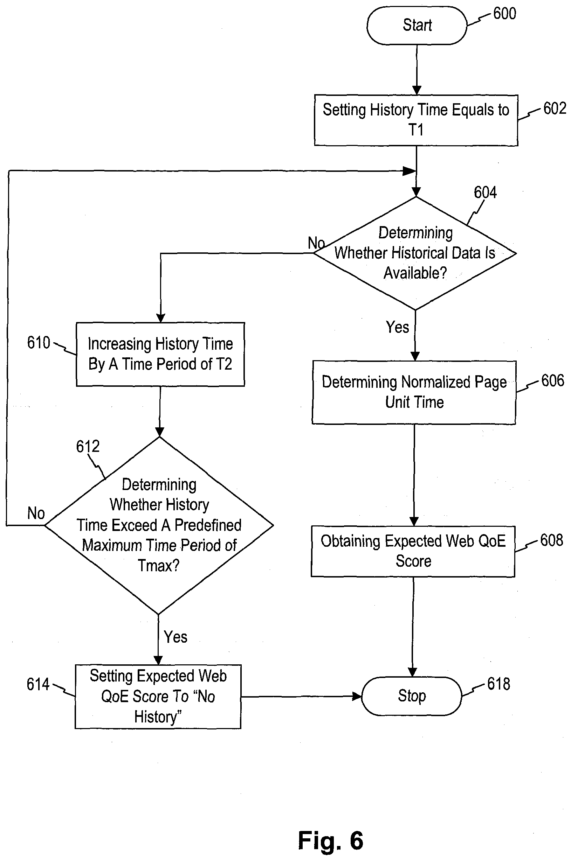

**FIG. 6** is a flowchart representing an exemplary method for predicting expected web QoE score. Referring to **FIG. 6**, it will be readily appreciated by one of ordinary skill in the art that the illustrated procedure can be altered to delete steps or further include additional steps. After initial step 600, an adaptive traffic manager (e.g., adaptive manager 130) sets (602) the history time equal to a preconfigured time period T₁, which can be any desired time period. For example, this time period could be for 60 seconds (similar to the 60-second inputs under Table 3). The adaptive traffic manager then determines (604) whether historical data for the time period T₁ is available. If the data is determined to be available, the adaptive traffic manager determines (606) the normalized page unit time by retrieving the historical measurements of the normalized page unit time corresponding to history time period of T₁. normalized page unit time is a measurement correlated with the time to load a typical web page with a fixed number of objects. After the normalized page unit time is determined, the adaptive traffic manager obtains (608) expected web QoE score by retrieving it from, for example, a prediction lookup table. After providing step 608, the method can proceed to end 618. The method described in **FIG. 6****,** for predicting expected web QoE score, can be an exemplary embodiment of step 412 in **FIG. 4**.

On the other hand, if the adaptive traffic manager determines (604) that there is no historical data available for the time period T₁, it increases (610) the history time by a time period of T₂. For example, this time period could be for 120 seconds (similar to the 120-second inputs under Table 3). In some embodiments, the time period T₁ and time period T₂ may or may not be the same. For example, time period T₁ could be 60 seconds, while time period T₂ could be for 30 seconds. After the history time has been increased, adaptive traffic manager determines (612) whether the history time exceeds a predefined maximum time period of Tₘₐₓ. If the increased time period is less than or equal to Tₘₐₓ, the adaptive traffic manager repeats the process from step 604. But if the increased time period is greater than Tₘₐₓ, the adaptive traffic manager sets expected web QoE score to "No History" and can proceed to end 618. The expected web QoE score is "No History" when no historical measurement is available for the maximum time period Tₘₐₓ. In some embodiments, if expected video QoE score is set to "No History," the adaptive traffic manager (e.g., adaptive traffic manager 130) can obtain expected QoE score from other sources, such as from a database (e.g. cell level database 304) that stores back-up QoE scores. It will be readily appreciated by one of ordinary skill in the art that this exemplary method of adaptive traffic management can be implemented at any level within the communication system. It is further appreciated that if adaptive traffic management is applied at the subscriber level, each subscriber can be handled individually and the QoE of one subscriber has no impact on that of any other subscriber.

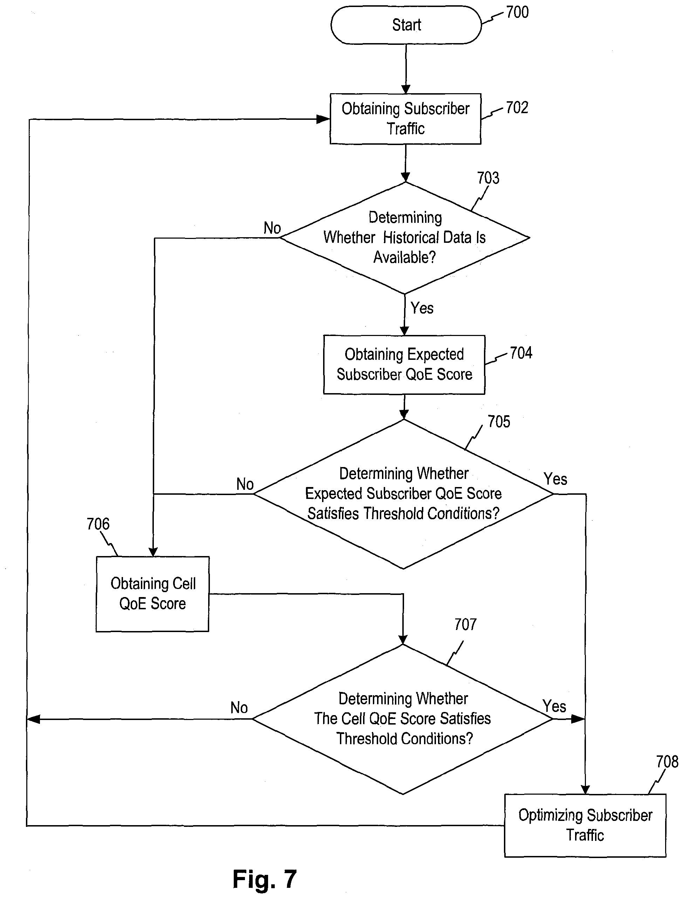

**FIG. 7** is a flowchart representing an exemplary method of cell level adaptive traffic management. Referring to **FIG. 7**, it will be readily appreciated by one of ordinary skill in the art that the illustrated procedure can be altered to delete steps or further include additional steps. In this exemplary method, the cell level historical data can be used as a back-up when no historical user experience data is available for a subscriber, or if the expected subscriber QoE score does not satisfy pre-configured threshold conditions in order to trigger traffic optimization. Cell level historical data can include cell level historical measurements stored in a database, for example, database 304 shown in **FIG. 3**. Historical measurements stored in the database can include measurements of parameters associated with playing of the video clips, such as the Video Playback Smoothness Index and the Video Client Network Delay Index. The historical measurements stored in database 304 can also include measurements of parameters associated with rendering of web pages, such as the normalized page unit time.

When the expected subscriber QoE score does not satisfy pre-configured threshold conditions, an adaptive traffic manager (e.g., adaptive traffic manager 130) would not trigger traffic optimization. Nevertheless, in some embodiments, when the threshold conditions are not satisfied, it may still be desirable to run optimization or it may be desirable to use expected QoE scores calculated from other sources such as from the cell level historical measurements 706 as a back-up.

After initial step 700, the adaptive traffic manager proceeds to obtain (702) subscriber traffic. Subscriber traffic can include any type of subscriber's data including video clips and web pages. At the cell level, for example, the subscriber traffic can come from mobile terminals. At other levels, such as at the gateway (e.g., gateway 120) or controller (e.g., controller 104) levels, the subscriber traffic can come from mobile terminals but routed through other parts of the communication system, such as from the base stations (e.g., base stations 106-109).

After obtaining the subscriber traffic, the adaptive traffic manager determines (703) whether historical data for a given time period is available. The historical data can include historical measurements of several parameters such as Video Playback Smoothness Index and the Video Client Network Delay Index associated with playing of the video clips and normalized page unit time associated with rendering of web pages. This historical data can correspond to different time periods as shown above in Tables 1 and/or 3.

If the historical data is determined to be available, the adaptive traffic manager obtains (704) an expected subscriber QoE score. The subscriber QoE score may be any of a video QoE score, a web QoE score, or other type of QoE scores at the subscriber level. A video QoE score is obtained based on historical measurements of several parameters of playing video clips, such as the Video Playback Smoothness Index and the Video Client Network Delay Index. A web QoE score is obtained based on historical measurements of several parameters of rendering web pages, such as the normalized page unit time. The adaptive traffic manager then determines (705) whether expected subscriber QoE score satisfies threshold conditions. For example, a threshold condition can be a threshold value that is pre-configured to any desirable values, such as values based on the historical measurements or past experiences. The threshold conditions can also be dynamically configured. For example, the adaptive traffic manager can examine the normalized page unit times for the most recent time period (e.g., 3 hours), sort out a pre-defined percentage (e.g. 10%) of the worst normalized page unit times and configure the threshold condition accordingly. Depending on the configuration of the threshold conditions, the adaptive traffic manager then optimizes (708) subscriber traffic if the threshold conditions are satisfied. For example, if the expected subscriber QoE falls below a pre-configured threshold, the adaptive traffic manager then optimizes (708) subscriber traffic. If desired, the threshold conditions can also be configured such that optimization triggers when expected subscriber QoE is greater than a pre-configured threshold value.

But if it is determined that the history data is not available at determination step 703 or if the expected subscriber QoE score does not satisfy a pre-configured threshold conditions at step 705, the adaptive traffic manager acquires (706) cell level historical measurements from a database (e.g., database 304 shown in **FIG. 3**.) and obtains (706) an expected cell QoE score based on the retrieved historical measurements.. A cell QoE score is subscriber QoE scores aggregated at the cell level, for example, at the base-station or Node-B level. In some embodiments, when the cell historical measurements are retrieved, the expected cell QoE score can be obtained similarly to that in step 510 and step 608. For example, the expected cell QoE score can be obtained by using a pre-defined look-up table. The expected cell QoE score can be used as a back-up when the subscriber QoE score is not available due to reasons such as no historical data can be obtained. In such cases, the cell QoE score can be used to serve an approximate score to the subscriber QoE score for purposes of determination of optimization.

In some embodiments, even if the expected subscriber QoE does not satisfy threshold conditions, it may also be desirable to obtain the expected cell QoE score before proceeding to optimizing the subscriber traffic, or it may be desirable to proceed to optimize the subscriber traffic notwithstanding the relationship between the expected subscriber QoE score and the threshold conditions.

After obtaining the expected cell QoE, the adaptive traffic manager then proceeds to step 707 to determine whether the expected cell QoE score satisfies pre-configured threshold conditions, and optimizes (708) subscriber traffic accordingly. Similarly, a threshold condition can be, for example, a threshold value that can be pre-configured to any desirable values, such as values based on the historical measurements or past experiences. Depending on the setting of the threshold conditions, the adaptive traffic manager then optimizes (708) subscriber traffic if the threshold conditions are satisfied. For example, if the expected cell QoE falls below a pre-configured threshold, the adaptive traffic manager then optimizes (708) subscriber traffic. If desired, the threshold conditions can also be set such that optimization triggers when expected cell QoE is greater than a pre-configured threshold value.

On the other hand, if the cell level score does not satisfy threshold conditions, the adaptive traffic manager (e.g., adaptive traffic manager 130) can go back to step 702 to obtain additional subscriber traffic. It will be readily appreciated by one of ordinary skill in the art that this exemplary method of adaptive traffic management can be implemented at any level within the communication system. It is further appreciated that each subscriber can be handled individually and the Quality of Experience of one subscriber has no impact on that of any other subscriber.

It will also be readily appreciated by one of ordinary skill in the art that more advanced traffic management rules can be implemented in the adaptive traffic manager to take into account the profile of the subscriber and the identity of the application being used by the subscriber. For example, a priority index can be assigned to the combination of subscriber profile and application ID and the traffic optimization can be applied first to the lowest priority traffic. If the overall subscriber experience does not improve, traffic from the next priority level is optimized and the process can be repeated until the overall user experience score is within desired limits.

The methods disclosed herein may be implemented as a computer program product, i.e., a computer program tangibly embodied in an information carrier, e.g., in a machine readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand alone program or as a module, component, subroutine, or other unit suitable for use in a computing environment. A computer program can be deployed to be executed on one computer or on multiple computers at one site or distributed across multiple sites and interconnected by a communication network.

In the preceding specification, the subject matter has been described with reference to specific exemplary embodiments. It will, however, be evident that various modifications and changes may be made without departing from the scope of the invention as set forth in the claims that follow. The specification and drawings are accordingly to be regarded as illustrative rather than restrictive. Other embodiments may be apparent to those skilled in the art from consideration of the specification and practice of the embodiments disclosed herein.

## Claims

1. A method comprising:
determining (504; 604) whether historical data is available for a first history period, the historical data comprising measurements of parameters associated with playing video data or rendering a web page, and the first history period being a period of time going back from the current time;
acquiring the historical data for the first history period or, if the historical data is not available for the first history period, acquiring historical data for a second history period, wherein the second history period is greater than the first history period;
determining (506, 508; 606) one or more user experience metrics for a specific terminal based on the acquired historical data, the user experience metrics including said measurements of parameters associated with playing video data or rendering a web page; and
acquiring (510; 608) an expected quality of experience score based at least in part on the determined one or more user experience metrics, wherein the expected quality of experience score is retrieved from a prediction lookup table and can be used for providing one or more traffic management optimization rules for current content data to the specific terminal.

2. The method of claim 1, wherein the determining (506) one or more user experience metrics comprises:
measuring a play time of the acquired video data;
measuring a stalling time of the acquired video data; and
computing a video playback smoothness index of the acquired video data based on the measured play time and the measured stalling time.

3. The method of claim 1, wherein the determining (508) one or more user experience metrics further comprises:
measuring a play time of the acquired video data;
measuring a delay time of the acquired video data; and
computing a video client network delay index of the acquired video data based on the measured delay time and the measured play time.

4. The method of claim 1, wherein the determining one or more user experience metrics comprises:
determining (606) a normalized page unit time according to one or more measurement corresponding to time for rendering a pre-defined number of objects based on acquired historical web data.

5. The method of claim 1, wherein the acquiring (510; 608) the expected quality of experience score comprises:
quantizing the one or more user experience metrics; and
wherein the lookup table includes a pre-determined quality of experience score corresponding to the quantized one or more user experience metrics for at least one history period.

6. The method of claim 1, wherein the one or more traffic management optimization rules are further based upon network probes, remote authentication dial-in user service, policy charging and rules function, subscriber profile repository, application types, and network performance metrics including packet round trip time, packet retransmission rate, and bandwidth.

7. A non-transitory computer readable storage medium storing instructions that, when executed by a computer, cause the computer to perform all the steps of the method of any of the preceding claims.

8. An apparatus for adaptive traffic management, comprising means for performing all the steps of the method of any of claims 1 to 6.

9. The apparatus of claim 8, wherein the apparatus comprises:
a traffic processor (220) configured to determine whether historical data is available for a history period and to acquire the historical data;
a user experience monitor (208) configured to determine one or more user experience metrics for a specific terminal based on the acquired historical data; and
a predictor (204) configured to acquire an expected quality of experience score based at least in part on the determined one or more user experience metrics, wherein the expected quality of experience score can be used for providing one or more traffic management optimization rules for current content data to the specific terminal.

## Patentansprüche

1. Verfahren, umfassend:
Bestimmen (504; 604), ob historische Daten für einen ersten historischen Zeitraum verfügbar sind, wobei die historischen Daten Messungen von Parametern umfassen, die mit dem Abspielen von Videodaten oder dem Rendern einer Webseite assoziiert werden, wobei der erste historische Zeitraum ein zeitlicher Zeitraum ist, der von der aktuellen Zeit zurückgeht;
Erwerben der historischen Daten für den ersten historischen Zeitraum oder, falls die historischen Daten für den ersten historischen Zeitraum nicht verfügbar sind, Erwerben von historischen Daten für einen zweiten historischen Zeitraum, wobei der zweite historische Zeitraum größer als der erste historische Zeitraum ist;
Bestimmen (506, 508; 606) einer oder mehrerer Benutzererfahrungsmetriken für ein spezifisches Endgerät basierend auf den erworbenen historischen Daten, wobei die Benutzererfahrungsmetriken die Messungen von Parametern, die mit dem Abspielen von Videodaten oder dem Rendern einer Webseite assoziiert werden, beinhalten; und
Erwerben (510; 608) einer erwarteten Qualität an Erfahrungsstand basierend zumindest teilweise auf der/den bestimmten einen oder mehreren Benutzererfahrungsmetriken, wobei die erwartete Qualität an Erfahrungsstand aus einer Vorhersagenachschlagetabelle abgerufen ist und verwendet werden kann, um eine oder mehrere Verkehrsverwaltungsoptimierungsregeln für aktuelle Inhaltsdaten an das spezifische Endgerät bereitzustellen.

2. Verfahren nach Anspruch 1, wobei das Bestimmen (506) einer oder mehrerer Benutzererfahrungsmetriken Folgendes umfasst:
Messen einer Abspielzeit der erworbenen Videodaten;
Messen einer Hinhaltezeit der erworbenen Videodaten; und
Berechnen eines Videoabspielglätteindexes der erworbenen Videodaten basierend auf der gemessenen Abspielzeit und der gemessenen Hinhaltezeit.

3. Verfahren nach Anspruch 1, wobei das Bestimmen (508) einer oder mehrerer Benutzererfahrungsmetriken weiter Folgendes umfasst:
Messen einer Abspielzeit der erworbenen Videodaten;
Messen einer Verzögerungszeit der erworbenen Videodaten; und
Berechnen eines Video-Client-Netzwerk-Verzögerungsindexes der erworbenen Videodaten basierend auf der gemessenen Verzögerungszeit und der gemessenen Abspielzeit.

4. Verfahren nach Anspruch 1, wobei das Bestimmen einer oder mehrerer Benutzererfahrungsmetriken Folgendes umfasst:
Bestimmen (606) einer normalisierten Seiteneinheitszeit nach einer oder mehreren Messungen entsprechend der Zeit für das Rendern einer zuvor definierten Anzahl an Objekten basierend auf erworbenen historischen Webdaten.

5. Verfahren nach Anspruch 1, wobei das Erwerben (510; 608) der erwarteten Qualität an Erfahrungsstand Folgendes umfasst:
Quantisieren der einen oder mehreren Benutzererfahrungsmetriken; und
wobei die Nachschlagetabelle eine zuvor festgelegte Qualität an Erfahrungsstand entsprechend der quantisierten einen oder mehreren Benutzererfahrungsmetriken für mindestens einen historischen Zeitraum beinhaltet.

6. Verfahren nach Anspruch 1, wobei die eine oder mehreren Verkehrsverwaltungsoptimierungsregeln weiter auf Netzwerksonden, einem Remote Authentication Dial-In User Service, einer Policy Charging and Rules Function, einem Teilnehmerprofil-Repositorium, Anwendungsarten und Netzwerkleistungsmetriken mit Paketumlaufzeit, Paketweiterübertragungsrate und Bandbreite basieren.

7. Nichtflüchtiges computerlesbares Speichermedium, das Anweisungen speichert, die, wenn von einem Computer ausgeführt, bewirken, dass der Computer alle Schritte des Verfahrens nach einem der vorhergehenden Ansprüche ausführt.

8. Vorrichtung zur adaptiven Verkehrsverwaltung, umfassend Mittel zum Ausführen aller Schritte des Verfahrens nach einem der Ansprüche 1 bis 6.

9. Vorrichtung nach Anspruch 8, wobei die Vorrichtung Folgendes umfasst:
einen Verkehrsprozessor (220), der konfiguriert ist, um zu bestimmen, ob historische Daten für einen historischen Zeitraum verfügbar sind und um die historischen Daten zu erwerben;
einen Benutzererfahrungsmonitor (208), der konfiguriert ist, um eine oder mehrere Benutzererfahrungsmetriken für ein spezifisches Endgerät basierend auf den erworbenen historischen Daten zu bestimmen; und
einen Prädiktor (204), der konfiguriert ist, um eine erwartete Qualität an Erfahrungsstand basierend zumindest teilweise auf der/den bestimmten einen oder mehreren Benutzererfahrungsmetriken zu erwerben, wobei die erwartete Qualität an Erfahrungsstand verwendet werden kann, um eine oder mehrere Verkehrsverwaltungsoptimierungsregeln für aktuelle Inhaltsdaten an das spezifische Endgerät bereitzustellen.

## Revendications

1. Procédé consistant à :
déterminer (504 ; 604) si des données historiques sont disponibles par rapport à une première période d'historique, les données historiques comprenant des mesures de paramètres associées à une lecture de données vidéo ou à une restitution d'une page Web, et la première période d'historique correspondant à une période de temps de retour par rapport à l'instant courant ;
acquérir des données historiques de la première période d'historique ou, si les données historiques ne sont pas disponibles par rapport à la première période d'historique, acquérir des données historiques d'une seconde période d'historique, dans lequel la seconde période d'historique est plus longue que la première période d'historique ;
déterminer (506, 508 ; 606) une ou plusieurs mesures d'expérience d'utilisateur d'un terminal spécifique sur la base des données historiques acquises, les mesures d'expérience d'utilisateur comprenant lesdites mesures de paramètres associées à une lecture de données vidéo ou à une restitution de page Web ; et
acquérir (510 ; 608) une qualité souhaitée de note d'expérience basée, au moins en partie, sur la ou les mesures d'expérience d'utilisateur déterminées, dans lequel la qualité souhaitée de note d'expérience est récupérée dans une table de consultation de prédiction et peut être utilisée pour fournir une ou plusieurs règles d'optimisation de gestion de trafic de données de contenu courant au terminal spécifique.

2. Procédé selon la revendication 1, dans lequel la détermination (506) de la ou des plusieurs mesures d'expérience d'utilisateur consiste à :
mesurer un temps de lecture des données vidéo acquises ;
mesurer un temps de blocage des données vidéo acquises ; et
calculer un indice de continuité de lecture vidéo des données vidéo acquises sur la base du temps de lecture mesuré et du temps de blocage mesuré.

3. Procédé selon la revendication 1, dans lequel la détermination (508) de la ou des mesures d'expérience d'utilisateur consiste en outre à :
mesurer un temps de lecture des données vidéo acquises ;
mesurer un temps de retard des données vidéo acquises ; et
calculer un indice de retard de réseau de client vidéo des données vidéo acquises sur la base du temps de retard mesuré et du temps de lecture mesuré.

4. Procédé selon la revendication 1, dans lequel la détermination de la ou des mesures d'expérience d'utilisateur consiste à :
déterminer (606) un temps unitaire de page normalisé conformément à la ou aux mesures correspondant au temps de restitution d'un nombre prédéfini d'objets basé sur des données historiques de Web acquises.

5. Procédé selon la revendication 1, dans lequel l'acquisition (510 ; 608) de la qualité souhaitée de note d'expérience consiste à :
quantifier la ou les mesures d'expérience d'utilisateur ; et
dans lequel la table de consultation comprend une qualité prédéfinie de note d'expérience correspondant à la ou aux mesures d'expérience d'utilisateur quantifiées par rapport à au moins une période d'historique.

6. Procédé selon la revendication 1, dans lequel la ou les règles d'optimisation de gestion de trafic sont en outre basées sur des essais de réseau, un service d'utilisateur d'authentification à distance d'appel entrant, une fonction de politique de facturation et de règles, un référentiel de profils d'abonnés, des types d'application et des mesures de performance de réseau comprenant un temps de propagation aller-retour de paquets, un débit de retransmission de paquets et une largeur de bande.

7. Support d'informations non transitoire lisible par ordinateur mémorisant des instructions qui, lorsqu'elles sont exécutées par un ordinateur, amènent l'ordinateur à exécuter toutes les étapes du procédé selon l'une quelconque des revendications précédentes.

8. Appareil de gestion adaptative de trafic, comprenant un moyen permettant d'exécuter toutes les étapes du procédé selon l'une quelconque des revendications 1 à 6.

9. Appareil selon la revendication 8, dans lequel l'appareil comprend :
un processeur de trafic (220) configuré pour déterminer si des données historiques sont disponibles par rapport à une période d'historique et pour acquérir les données historiques ;
un dispositif de surveillance (208) d'expérience d'utilisateur configuré pour déterminer une ou plusieurs mesures d'expérience d'utilisateur d'un terminal spécifique basées sur les données historiques acquises ; et
un prédicteur (204) configuré pour acquérir une qualité souhaitée de note d'expérience basée, au moins en partie, sur la ou les mesures d'expérience d'utilisateur déterminées, dans lequel la qualité souhaitée de note d'expérience peut être utilisée pour fournir une ou plusieurs règles d'optimisation de gestion de trafic de données de contenu courant au terminal spécifique.
